# EUROPÄISCHE PATENTSCHRIFT

(11) **EP 1 369 403 B1**
(45) Veröffentlichungstag und Bekanntmachung des Hinweises auf die Patenterteilung: **19.01.2005**
(21) Anmeldenummer: 03004793.0
(22) Anmeldetag: 05.03.2003
(51) Int. Cl.: C04B 35/80, C04B 35/573, F16D 69/02

(54) **Verfahren zur Herstellung eines tribologisch über eine Funktionsoberfläche beanspruchten Bauteils**
Process for the production of a component having a tribologically stressed functional surface
Procédé de fabrication d'une pièce ayant une surface chargée tribologiquement

(30) Priorität: 29.05.2002 DE 10224243
(43) Veröffentlichungstag der Anmeldung: 10.12.2003
(73) Patentinhaber: Deutsches Zentrum für Luft- und Raumfahrt e.V., 51147 Köln (DE)
(72) Erfinder: Henke, Thilo, 70563 Stuttgart (DE); Renz, Ralph, 71069 Sindelfingen (DE); Heidenreich, Bernhard, 71679 Asperg (DE)
(74) Vertreter: Grimm, Ekkehard, Dipl.-Phys.

(56) Entgegenhaltungen:
- EP-A- 1 251 289
- WO-A-02/28801
- DE-A- 19 651 798
- US-A- 6 086 814

## Beschreibung

Die vorliegende Erfindung betrifft ein Verfahren zur Herstellung eines tribologisch über eine Funktionsoberfläche beanspruchten Bauteils, das einen Halterungskörper aus mit Kohlenstoff- und/oder Keramikfasern verstärktem Verbundwerkstoff aufweist.

Bauteile, deren Funktionsoberflächen einer ständig oder auch nur zeitweise auftretenden Beanspruchung durch Reibung und/oder Abrasion ausgesetzt sind, wie z. B. Lager, Transportwalzen, Andruckrollen, und dergleichen, werden aus Verschleißgründen in der Regel aus sehr harten Materialien gefertigt. Zu diesen Materialien zählen beispielsweise gehärteter Stahl, monolithisches SiC oder Al₂O₃. Außerdem werden die aus diesen Materialien hergestellten Körper mit Verschleißschutzschichten versehen, wie zum Beispiel WC, SiC, DLC (diamantähnlicher Kohlenstoff). Problematisch bei diesen Bauteilen sind deren begrenzte Temperaturbeständigkeit bzw. Sprödigkeit und die oftmals nur geringe Schichtdicke der aufgebrachten Verschleißschutzschichten.

Bei Bremsscheiben oder Kupplungsbelägen sind diese Materialien bzw. deren Beschichtungen aufgrund ihrer Reibeigenschaften bzw. Sprödigkeit nur bedingt einsetzbar, so dass diese Bauteile meist aus Gußeisen, Stahlguß bzw. Kohlenstoff/Kohlenstoff
(Carbon/Carbon) nur für eine begrenzte Lebensdauer ausgelegt werden können.

Bauteile aus faserverstärkten Keramiken (z.B. C/SiC, C/C-SiC, SiC/SiC) sind seit längerem bekannt und vereinen die Vorteile monolithischer Keramiken, wie hohe Härte und Temperaturbeständigkeit, mit dem gutmütigen Bruchverhalten eines faserverstärkten Konstruktionswerkstoffes. Da die Ausgangsprodukte und Herstellungstechnologie dieser Bauteile vergleichsweise teuer bzw. aufwändig sind, wird in der Regel eine sehr hohe Lebensdauer gefordert. Aus diesem Grund wurden auch für diese Materialien spezielle Verschleißschutzschichten entwickelt.

Zum Beispiel ist aus der DE-C1 198 34 018 eine SiC-haltige Schutzschicht bekannt, die die Verschleiß- und Abrasionsbeständigkeit faserkeramischer Bauteile beträchtlich erhöht. Diese Schichten werden durch Reaktion von schmelzflüssigem Silizium (Si) und Kohlenstoff (C) erzeugt derart, dass vor der Keramisierung poröse Kohlenstoffschichten auf die zu beschichtende Oberfläche aufgebracht werden. Durch die Herstellung bei Temperaturen oberhalb des Schmelzpunktes von flüssigem Silizium (T>1420°C) und des im Vergleich zum Grundmaterial unterschiedlichen Ausdehnungskoeffizienten sind diese vorzugsweise 0,2 bis 2 mm dicken Schichten meist mit einer Vielzahl von Rissen behaftet. Hohe Vorschübe bei der Bearbeitung bzw. schlagartige Stöße in reibenden Eingriffen können, aufgrund dieser Entspannungsrisse und der Sprödigkeit, vornehmlich an den Bauteilkanten zu einem Abplatzen bzw. zum großflächigen Ausbrechen der Beschichtung führen.

Weiterhin ist aus der DE-A1 196 51 798 eine Reibeinheit bekannt, die aus Ver schleißschutzgründen bzw. zur besseren Wärmeabfuhr bis an die Reibfläche reichende Formkörper aufweist. Bei diesen Formkörpem handelt es sich um vorgefertigte, endbearbeitete Formkörper, die in die Reiboberfläche eingelassen werden und beispielsweise aus SiC bestehen. Aus Fertigungsgründen sind diese Formkörper meist als rotationssymmetrische Bolzen ausgebildet und besitzen vorzugsweise einen Durchmesser von 10-20 mm. Aufgrund der Vielzahl der eingesetzten, vorgefertigten Formkörper ist ein hoher Fertigungsaufwand notwendig. Zusätzlich besitzen diese Formkörper einen zum Grundmaterial höheren Ausdehnungskoeffizienten, so dass bei zyklischer, thermischer Belastung mit einem Lockern der Formkörper im Betrieb zu rechnen ist. Außerdem ist die Wärmeeinbringung bei dieser Ausgestaltung sehr ungleichmäßig und kann zu einer lokalen, sogenannten "Hot-Spot-Bildung" führen und dadurch das Reib- und Verschleißverhalten negativ beeinflussen.

Ein Verfahren zur Herstellung eines tribologisch über eine Funktionsoberfläche beanspruchten Bauteils, das einen Halterungskörper aus mit Kohlenstoff- und/oder Keramikfasern verstärktem Verbundwerkstoff aufweist, ist beispielsweise aus den vorstehend angeführten Dokumenten bekannt.

Der vorliegenden Erfindung liegt nun die Aufgabe zugrunde, die vorstehend angeführten Nachteile des Stands der Technik zu vermeiden.

Gelöst wird die Aufgabe, ausgehend von dem vorstehend beschriebenen Stand der Technik, dadurch, dass die Funktionsoberfläche(n) des Halterungskörpers eine Vielzahl von voneinander getrennten, lokalen, Karbid enthaltenden Oberflächenbereichen aufweist (aufweisen), die mit dem Halterungskörper, Einlagen bildend, fest verbunden sind, und daß zur Bildung dieser Einlagen in den Halterungskörper, der einen C-Gehalt von mindestens 20 Gew.-% aufweist, Aussparungen eingebracht werden, deren Tiefe höchstens etwa 3/4 der Gesamtdicke des Halterungskörpers beträgt, daß diese Aussparungen mit entweder einem kohlenstoffhaltigen Material und/oder einer kohlenstoffhaltigen Paste aufgefüllt werden und in Kontakt mit flüssigem Metall zur Bildung der Einlagen mit Metall/Karbid enthaltenden Oberflächenbereichen bei Temperaturen oberhalb des Schmelzpunkts des Metalls gebracht werden, wobei diese Einlagen direkt mit dem Halterungskörper verbunden werden und das Metall wenigstens teilweise mit dem Kohlenstoff zu Karbid reagiert. Nach diesem Verfahren ergibt sich ein Bauteil, das in die Funktionsoberfläche eingelassene und im Vergleich zum Grundmaterial des Halterungskörpers eine wesentlich härtere, lokal begrenzte, Metall/Karbid enthaltende Bereiche (Die Bereiche enthalten sowohl reines Metall als auch dessen Karbid) in einer großen Anzahl aufweist. Diese eingelassenen Bereiche bzw. Einlagen werden unmittelbar mit der Keramisierung des Halterungskörpers in-situ erzeugt, indem sowohl die Einlagen als auch der Halterungskörper selbst mit flüssigem Metall in Kontakt gebracht werden. Hierbei werden die Einlagen definiert in ihrer Materialzusammensetzung dadurch eingestellt, dass das in die Aussparungen eingebrachte kohlenstoffhaltige Material bzw. Paste in definierter Menge eingebracht bzw. dessen Anteil an Kohlenstoff derart eingestellt wird, dass eine bestimmte Menge an Kohlenstoff zur Karbidbildung vorliegt und zur gewünschten Zusammensetzung der Einlagen aus Metall und Karbid führt.

Weiterhin ergibt sich eine feste Verbindung zwischen dem Halterungskörper und den Einlagen dadurch, dass das Metall mit dem Kohlenstoff des Halterungskörpers bzw. mit dem eingebrachten Kohlenstoff in der Grenzschicht des Halterungskörpers und der Einlagen zu Karbid umgesetzt wird und hierdurch eine temperaturstabile Reaktionsfügung ausgebildet wird. Das faserverstärkte und bruchzähe Grundmaterial des Halterungskörpers und die das Metall/Karbid enthaltenden Bereiche werden hierdurch fest zusammengefügt, da sowohl der Halterungskörper als auch die Einlagen in ein und demselben Verfahrensschritt mit flüssigem Metall benetzt werden. Es wird somit eine Vielzahl von Metall/Karbid enthaltenden Bereichen in dem Halterungskörper erzeugt, die darüber hinaus noch fest in die Gefügestruktur des Halterungskörpers integriert sind und somit ein Ausbrechen dieser Bereiche, auch bei hohen, thermischen und mechanischen Beanspruchungen, ausgeschlossen werden kann. Das flüssige Metall wird vorzugsweise in den entsprechend vorbereiteten Körper infiltriert.

Die Verschleißbeständigkeit kann in Abhängigkeit des Einsatzbereiches und der geforderten Lebensdauer über die Anzahl bzw. die Zusammensetzung der Metall/Karbid haltigen Einlagen angepasst werden. Da die Einlagen in-situ gebildet werden, können die Einlagen in ihrer Form variiert werden; so sind auch kegelförmige Aussparungen möglich, mit denen auch ein gradierter Aufbau mit einer entsprechend geringen Neigung zur Rissbildung erreicht werden kann. Auch kann die Wärme entsprechend der hohen Wärmeleitfähigkeit und der Anzahl der Metall/Karbid enthaltenden Bereiche direkt und gleichmäßig in das Volumen des Bauteils eingebracht werden, damit kann ein gleichmäßiges Absenken der Oberflächentemperatur, über die gesamte Funktionsoberfläche des Bauteils verteilt, eingestellt werden.

Fertigungstechnisch ergeben sich insbesondere dann Vorteile, wenn ein kurzfaserverstärkter Halterungskörper aufgebaut wird. Bereits in den Grünkörper können die Aussparungen bzw. Hohlräume über ein vorgefertigtes Formwerkzeug eingepresst werden, was schnell, kostengünstig und ohne eine zusätzliche mechanische Bearbeitung möglich ist. Solche Grünkörper aus einem polymeren Kohlenstoff- bzw. Keramikfaser verstärktem Verbundwerkstoff werden anschließend pyrolysiert. Die eingepressten Hohlräume bzw. Aussparungen bleiben während dieser Pyrolyse weitgehend erhalten. Diese Aussparungen sind dann einfach von der Oberfläche aus mit einem kohlenstoffhaltigen Material, bevorzugt einer kohlenstoffhaltigen Paste, auffüllbar. Der enthaltende Kohlenstoff reagiert dann bei der Keramisierung mit dem flüssigen Metall zu Karbid und bildet dann nach der Abkühlung die verschleißfesten Metall/ Karbid-Bereiche.

Wie bereits vorstehend erwähnt ist, können die Aussparungen durch Einpressen mit einem entsprechenden Formwerkzeug in einfacher, verfahrenstechnischer Weise erzeugt werden. Hierbei kann die Vorform durch das Verpressen eines Faser/Harz-Gemisches hergestellt werden, wobei die Aussparungen dabei durch ein entsprechend geformtes Press- bzw. Formwerkzeug gebildet werden. Die vorgenannten Fasern können sowohl Kohlenstofffasern als auch Keramikfasem sein; bevorzugt sind allerdings die Kohlenstofffasern, unter anderem aufgrund deren guter Verfügbarkeit.

Besonders bevorzugt sind für die Herstellung des Halterungskörpers Fasern mit einer Länge im Bereich von 1 mm bis 200 mm. Sehr kurze Fasern, im Bereich von 1 mm, haben den Vorteil, dass ein weitgehend homogener Halterungskörper hergestellt werden kann, während Fasern mit einer Länge bis zu 200 mm dann vermehrt eingesetzt werden sollten, wenn hohe Festigkeiten des Halterungskörpers erzielt werden sollen.

Obwohl es verfahrenstechnisch bevorzugt ist, unmittelbar in die Vorform die Aussparungen mittels eines entsprechenden Formwerkzeugs einzupressen, können aber auch in eine Vorform, die aus einem nicht verformbaren Grünling bzw. einem bereits pyrolysierten Grünling besteht, Aussparungen durch spanabhebende Bearbeitung eingebracht werden, beispielsweise in der Form von eingesägten Nuten. Ein solcher nicht verformbarer Grünling ist vorzugsweise aus einem mit mehreren übereinandergestapelten Geweben oder Gewirken verstärkten polymeren Verbundwerkstoffs aufgebaut. Auch kann es sich hierbei um einen in allen drei Raumachsen faserverstärkten Grünling handeln. Im Falle eines bereits pyrolysierten Grünlings können die Aussparungen nur durch spanabhebende Bearbeitung eingebracht werden, da der pyrolysierte Grünkörper aufgrund seiner Sprödigkeit und Bruchempfindlichkeit nicht ohne mechanische Beschädigung verformt werden kann.

Die Aussparungen können auch im Querschnitt eine kreisförmige oder polygonale Form aufweisen, die darüber hinaus von der Oberfläche in den Halterungskörper hinein sich verjüngend ausgebildet sein können. Gerade mit einer solchen sich ändernden Querschnittsform senkrecht zur Funktionsoberfläche kann das Temperaturverhalten über die Dicke des Bauteils eingestellt werden.

In einer weiteren, bevorzugten Maßnahme werden die Aussparungen mit einer Phenolharz und Kohlenstoffpulver enthaltenden, schmier- oder gießfähigen Paste gefüllt. Gerade solche Pasten haben den Vorteil, dass ihre Zusammensetzung in einem großen Bereich entsprechend dem gewünschten Anwendungsfall und der hieraus erforderlichen Fließfähigkeit bzw. des Kohlenstoffgehalts einfach variiert werden kann.

Diese Pasten sollten dann eingesetzt werden, wenn eine Vielzahl sehr kleiner Einlagen mit geringer Tiefe gebildet werden sollen, da die Paste bereits bei kleinsten Kontaktflächen sehr gut haftet. Nach der Aushärtung des Phenolharzes kann das Bauteil außerdem mechanisch weiter bearbeitet werden ohne das die ausgehärteten Harzpaste in den Aussparungen beschädigt oder herausgelöst wird.

In einer anderen Verfahrensweise werden die Aussparungen mit einem pyrolysierbaren Material gefüllt. Bei einem solchen Material kann es sich um sehr billige zellulosehaltige Materialien handeln. Eine solche Maßnahme sollte immer dann herangezogen werden, wenn keine extrem hohen Karbidgehalte (> 50%) der Einlagen gefordert sind.

Auch können die Aussparungen mit einer Paste aus Phenolharz und einem pyrolysierbaren Material gefüllt werden. Als pyrolysierbares Material eignen sich dabei wiederum zellulosehaltige Materialien. Diese Maßnahme sollte immer dann herangezogen werden, wenn eine für Zwischenbearbeitungs- oder Handlingszwecke verbesserte Verbindung zum Halterungskörper vor der eigentlichen Einlagenbildung erzielt werden soll. Das pyrolysierbare Material, mit dem die Aussparungen gefüllt werden, sollte vor dem Einbringen in die Aussparungen bei Temperaturen bis mindestens 900°C unter Luftabschluß pyrolysiert werden. Dies hat den Vorteil, dass wesentlich höhere C-Gehalte des Ausgangsmaterial zur Einlagenbildung erreicht werden können und dass Einlagen mit einem im Vergleich zur Verwendung von nicht pyrolysiertem Ausgangsmaterial höherem Karbidgehalt erzeugt werden können. Außerdem werden durch die Pyrolyse hervorgerufene Schwindungseffekte des pyrolysierbaren Materials und dadurch entstehende Risse vermieden.

Gleiches gilt dann, wenn eine Paste mit bereits bis mindestens 900°C unter Luftabschluß pyrolysiertem Material verwendet wird. Vorteil hierbei ist wiederum die verbesserte Haftung der Paste am Halterungskörper.

Bei diesen Verfahren und Maßnahmen wird demzufolge ein entsprechend der Verwendung vorbereitetes C-haltiges Ausgangsmaterial bereitgestellt; dieses Material wird dann bei mindestens 900°C unter Luftabschluß pyrolysiert und anschließend wird das pyrolysierte Material entweder direkt in die Aussparungen eingebracht oder mit einem Harz zu einer streich- oder gießfähigen Paste verarbeitet und dann in die Aussparungen eingebracht.

Als pyrolysierbares Material können auch Holzpulver, Holzfasern, Zellstoff, Papier, Pappe eingesetzt werden, entweder jeweils als Einzelkomponenten, oder auch in einer gemischten Form. Diese Materialien sind sehr einfach in ihrer Struktur herstellbar; sie sind beispielsweise in Faserform, in Pulverform, gehäckselt oder verspant verwendbar. Diese Materialien in Pulverform sind dann zu verwenden, wenn volumenmäßig kleinere Einlagen gebildet werden sollen während Fasergebilde immer dann bevorzugt sind, wenn großflächig und tiefe Einlagen erzeugt werden sollen. Demzufolge kann mit einem entsprechend höheren oder niedrigeren Anteil von Fasern und/oder Pulver, das Verschleiß-, Reib- und Wärmeverhalten den geforderten Einsatzbestimmungen des Bauteils angepasst werden. Außerdem kann über den Fasergehalt das thermische Ausdehnungsverhalten der Einlagen an das des Halterungskörpers angenähert bzw. angepasst werden.

Eine Phenolharzpaste, die Kohlenstofffasern und/oder Kohlenstoffpartikel enthält, mit denen die Aussparungen vor Einbringen des flüssigen Metalls gefüllt werden, führt dazu, dass eine verbesserte Bindung zum Halterungskörper erreicht wird. Hierdurch können u.a. auch fehlerhaft keramisierte Einlagen vermieden werden, da ein Aufschwimmen des zur Karbidbildung verwendeten Ausgangsmaterial bei der Einlagenbildung mit dem bereitgestellten flüssigen Metall vermieden wird.

Bevorzugt wird als Karbid bildendes Metall Silizium eingesetzt; Silizium hat den Vorteil, dass es sehr billig und großtechnisch verfügbar ist. Das gebildete Siliziumkarbid hat außerdem den Vorteil einer hohen Wärmeleitfähigkeit (ca. 120 W/mK) und einer extrem hohen Härte. Dies führt im tribologischen Kontakt zu sehr günstigen und hohen Reibwerten bzw. einer hohen Verschleiß- und Oxidationsbeständigkeit. Aus verschleißtechnischer Sicht sollte dabei der (Rest)Kohlenstoffgehalt der SiC-haltigen Einlagen auf maximal 20 Gew.-% eingestellt werden. Weiterhin liegt ein zu bevorzugender Bereich des SiC-Gehalts der Einlagen bei 20 - 80 Gew.-%. Ein hoher SiC-Gehalt führt zu extrem verschleißfesten Einlagen mit hoher Wärmeleitfähigkeit aber entsprechend hoher Sprödigkeit, während ein niedriger SiC-Gehalt im Bereich von 20 Gew.-% die Untergrenze bzgl. notwendiger Verschleißbeständigkeit darstellt.

Die jeweiligen Einlagen sollten einen Oberflächenbereich mit einem Durchmesser von 2 bis 5 mm auf der Funktionsoberfläche des Halterungskörpers aufweisen. Die Tiefe der Aussparungen, die zur Ausbildung der Einlagen dienen, sollten eine im Bereich von 1 bis 5 mm liegen.

Auch sollte darauf geachtet werden, dass die Oberflächenbereiche der Einlagen mit ihren Rändern zwischen 2 bis 10 mm vom Bauteilrand des Halterungskörpers beabstandet werden, so dass diese Oberflächenbereiche durch ausreichende Randbereiche des Bauteils aus dem Grundmaterial des Halterungskörpers, das eine hohe mechanische Festigkeit aufweist, geschützt sind.

Die Oberflächenbereiche können auch in einem schachbrettartigen Muster angeordnet werden derart, dass etwa 50% der Oberfläche des Bauteils durch die Fläche der Einlagen gebildet werden.

Die Karbid enthaltenden Bereiche können in einem Grundkörper bzw. Halterungskörper aus C/C (kohlenstofffaserverstärkter Kohlenstoff), C/SiC (kohlenstofffaserverstärktes Siliziumkarbid) oder aus C/C-SiC (kohlenstofffaserverstärkter Kohlenstoff mit Siliziumkarbid-Matrixanteilen) eingebracht werden (C/SiC und C/C-SiC sind unterschiedliche Bezeichnungen der Hersteller. Werkstoffrelevante Unterschiede dieser beiden Werkstoffe sind nicht vorhanden.) Ein Grundkörper aus C/C ist dann zu verwenden, wenn sehr leichte und nur oberflächlich geschützte Bauteile hergestellt werden sollen. C/SiC und C/C-SiC-Grundkörper werden dann verwendet, wenn eine insgesamt höhere Oxidationsbeständigkeit, Wärmeleitfähigkeit und Lebensdauer des Halterungskörpers gefordert wird.

Die Karbid enthaltenden Bereiche können auch in einem Grundkörper eingebracht werden, der überwiegend aus einzelnen, übereinander gestapelten Kohlenstoff-Gewebeeinlagen aufgebaut ist. Ein solcher Körper weist eine hohe Festigkeit in Ebenenrichtung auf und sollte bei tribologisch beanspruchten Bauteilen eingesetzt werden, die Verwendung als dünnwandige, filigrane und trotzdem hochfeste Sicherheitsbauteile wie z.B. Motorradbremsen finden.

Für den Halterungskörper kann eine Vorform hergestellt werden, in deren Oberfläche das zur Karbidbildung verwendete pyrolysierte Material eingepresst wird und das nach der Karbidbildung die Karbid enthaltenden Bereiche darstellt.

Einzelne Karbid enthaltende Bereiche können mit schräg zur Oberflächennormalen verlaufenden Seiten ausgebildet werden, wodurch die Karbid enthaltenden Bereiche formschlüssig in dem Halterungskörper verankert werden können. Kegelförmige, Karbid enthaltende Bereiche können als Verschleißanzeige, zum Beispiel an Reiboberflächen, verwendet werden. Hierbei kann der Dickenverschleiß der Oberfläche anhand der Änderung des sichtbaren Durchmessers der kegelförmigen, Karbid enthaltenden Bereiche in der Oberfläche ermittelt werden.

Es ist ersichtlich, dass die Anzahl und die Anordnung der Funktionsoberflächen den jeweiligen Einsatzbereichen angepasst werden. Ein Teil dieser Funktionsoberflächen kann dabei auch in Form eines Logo, einer Beschriftung oder einer Kennzeichnung angeordnet werden, um die Bauteile zu markieren und um diese identifizieren zu können, ohne die Gesamtstruktur des Bauteils und dessen Eigenschaften zu verändern.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: eine Draufsicht auf einen Bremsscheibenrohling gemäß der Erfindung,
- Figur 2: einen Schnitt entlang der Schnittlinie A-A in Figur 1;
- Figur 3A, Figur 3B und Figur 3C: eine Anordnung, mit der der Bremsscheibenrohling, wie er in den Figuren 1 und 2 gezeigt ist, herstellbar ist,
- Figuren 4 bis: 7 verschiedene Reibbeläge, hergestellt gemäß dem Verfahren der Erfindung, mit verschiedenen Strukturen der Funktionsflächen,
- Figur 8: eine Möglichkeit einer Anordnung einer Beschriftung im Bereich der Funktionsoberfläche eines nach der Erfindung hergestellten Bauteils, und
- Figur 9: eine Anordnung von einzelnen Oberflächenbereichen, die im Gesamtbild ein Logo ergeben.

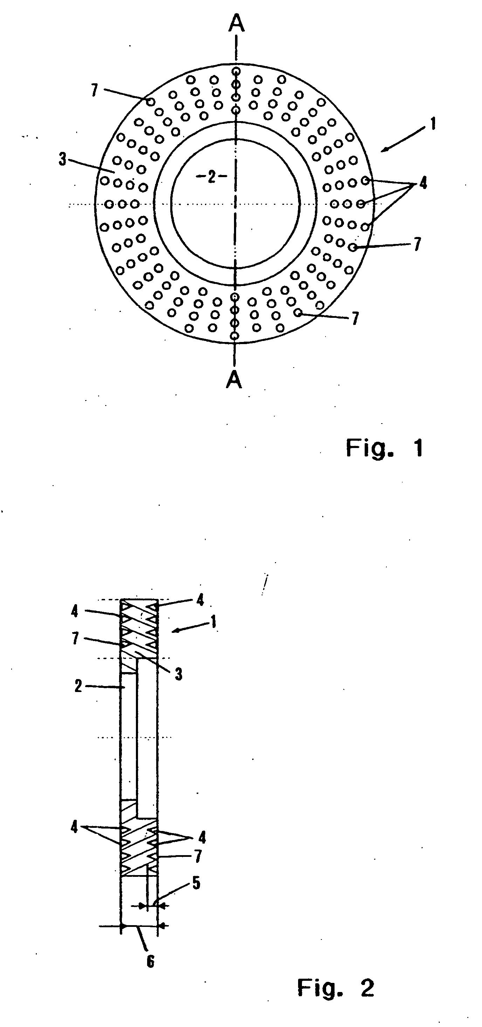

In den Figuren 1 und 2 ist eine Draufsicht sowie eine Schnittansicht eines verschleißfesten Bauteils in Form eines Bremsscheibenrohlings 1 (Rohling ohne Anbindungsbohrungen) gezeigt. Dieser Bremsscheibenrohling 1 ist ringförmig aufgebaut mit einer zentralen Öffnung 2. Der Grundkörper 3 dieses Bremsscheibenrohlings 1 besteht aus einem porösen kohlenstofffaserverstärkten Kohlenstoffmaterial, aufgebaut aus mehreren übereinandergestapelten Kohlenstoffgewebelagen. Von beiden Oberflächenseiten aus sind in dem Grundkörper 3 Aussparungen 4 eingebracht. Diese Aussparungen weisen eine Tiefe 5 (siehe Figur 2) von 3 mm auf, bei einer Gesamtdicke 6 der Bremsscheibe 1 von 12 mm.

Die Aussparungen weisen eine konische Form auf, die sich zur Oberfläche des Grundkörpers 3 hin erweitert. Diese Aussparungen 4 werden vor der Keramisierung mit einem kohlenstoffhaltigen Material, beispielsweise in Pulver- oder Pastenform, aufgefüllt. Diese so vorbereiteten Einlagen 7 führen dazu, dass sich bei der Keramisierung des Gesamtbauteils, bei der auch die keramische Matrix des Grundkörpers gebildet werden kann, der in den Einlagen 7 vorhandene Kohlenstoff wenigstens teilweise mit dem zur Keramisierung verwendeten Metalls zu Karbid umwandelt. Es entsteht hierdurch eine Vielzahl von Metall/Karbid enthaltender Bereiche in sehr einfacher Weise. Diese Bereiche erhöhen beispielsweise bei einem hohen Anteil an Karbid die Verschleißfestigkeit und die Wärmeleitfähigkeit der Bremsscheibe enorm.

Außerdem kann über die konische Form der Aussparungen 4, das Temperaturverhalten der Bremsscheibe über deren Dicke 6 eingestellt werden, da die mit Metall/Karbid aufgefüllten Aussparungen i.a. eine höhere Wärmeleitfähigkeit als der Grundkörper aufweisen und durch einen höheren Volumenanteil der mit Metall/Karbid aufgefüllten Aussparungen in reibflächennahen Bereichen die Wärmeleitfähigkeit der Bremsscheibe deutlich erhöht werden kann und somit eine Überhitzung der Reibfläche vermieden wird. Außerdem kann die konische Form als Verschleißanzeige verwendet werden, da sich bei entsprechendem Verschleiß der Durchmesser der mit Metall/Karbid aufgefüllten Aussparungen verringert.

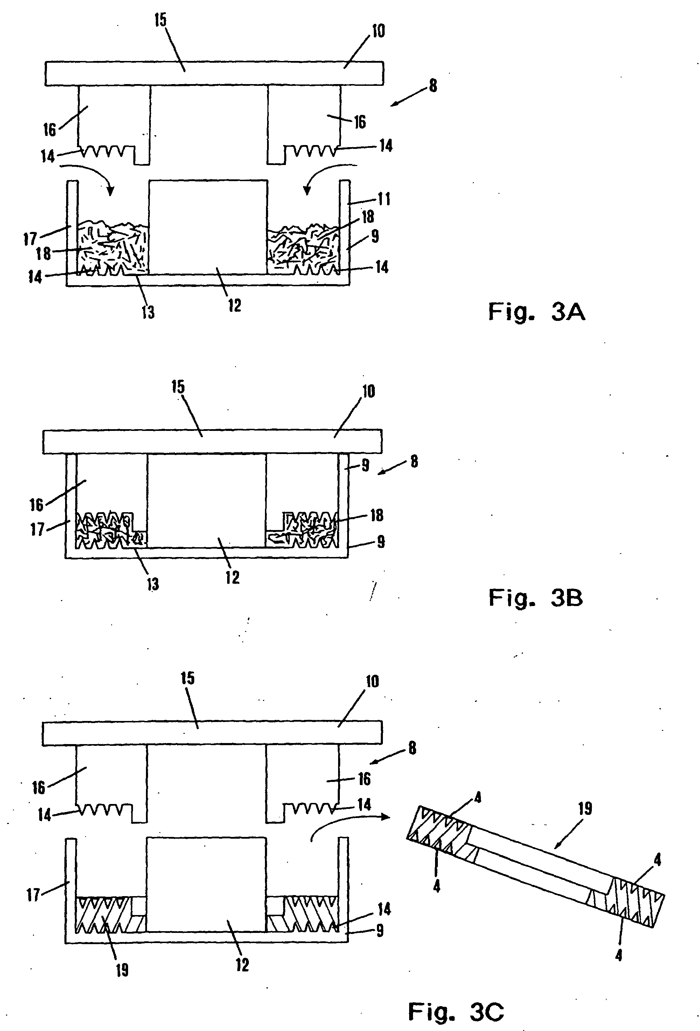

In den Figuren 3A bis 3C ist schematisch in drei Stufen ein Pressvorgang mit einer Pressvorrichtung, allgemein mit dem Bezugszeichen 8 bezeichnet, dargestellt, um einen Bremsscheibenrohling 1 entsprechend den Figuren 1 und 2 herzustellen.

Die Pressvorrichtung 8 umfasst ein Unterteil 9 und ein Oberteil 10. Das Unterteil 9 mit einem kreisförmigen Innenraum 11 besitzt einen zentralen Zylinder 12, der dem Durchmesser der zentralen Öffnung 2 der Bremsscheibe 1 entspricht. Auf dem Boden 13 des Unterteils 9 sind gleichförmig verteilt kegelförmige Erhebungen 14 ausgebildet, die in ihrer Lage und Orientierung den Aussparungen 4 entsprechen, die in der Oberfläche des Bremsscheibenrohlings 1 in den Figuren 1 und 2 zu sehen sind, und die mit den Einlagen 7 ausgefüllt sind.

Das Oberteil 10 der Pressvorrichtung 8 umfasst ein Deckelteil 15 sowie ein Ringteil 16; die Breite des Ringteils 16 ist so dimensioniert, dass sie der lichten Weite des Innenraums 11 zwischen der Außenwand 17 des Unterteils 9 und dem zentralen Zylinder 12 entspricht. An der Unterseite des Ringteils 16 sind kegelförmige Erhebungen 14, die denjenigen an dem Boden 13 des Unterteils 9 entsprechen, ausgebildet, die die Aussparungen 4 in der anderen Seite des Bremsscheibenrohlings 1 (siehe Figur 2) erzeugen.

Die Pressvorrichtung 8, die in Figur 3A zu sehen ist, wird zum Herstellen eines Bremsscheibenrohlings 1 entsprechend den Figuren 1 und 2 mit einem Faser/Harz-Gemisch gefüllt, wobei es sich bei den Fasern vorzugsweise um Kohlenstofffasern handeln kann. Als Harz ist vorzugsweise ein Phenolharz zu verwenden.

Nachdem eine ausreichende Menge des Faser/Harzgemisches 18 in den Innenraum 11 eingefüllt ist, wird das Oberteil 10 auf das Unterteil 9 aufgesetzt. Das Faser/Harzgemisch wird dabei temperatur- und druckgesteuert verdichtet. Anschließend wird der verdichtete Presskörper bei Temperaturen im Bereich von 180 bis 250°C und konstantem Druck ausgehärtet Hierbei entsteht eine kohlenstofffaserverstärkte Kunststoff-Vorform 19, die dem in Fig. 1 und 2 abgebildeten Bremsscheibenrohling entspricht.

Schließlich wird nach dem Aushärten die Vorform 19 entnommen. Diese Vorform 19 besitzt, aufgrund der kegelförmigen Erhebungen 14 im Oberteil 10 und dem Unterteil 9 der Pressvorrichtung 8, Aussparungen 4 im Bereich der Ober- und Unterseite. Anschließend wird diese Vorform unter Luftabschluß pyrolysiert, so dass sich die polymere Matrix in Kohlenstoff umwandelt. Hierbei entsteht, aufgrund des Volumenschrumpfs der Matrix und der Schrumpfungsbehinderung der eingelagerter C- bzw. Keramikfasern, ein poröser C/C-Körper, bei dem die geometrische Form der Aussparungen 4 weitgehend erhalten bleiben, da der Gesamtschrumpfs des Bauteils < 10% beträgt. Anschließend werden die Aussparungen 4 mit einem kohlenstoffhaltigen oder pyrolysierbaren Material gefüllt, indem beispielsweise eine Phenolharz/Kohlenstoffpulvermischung in diese Aussparungen 4 eingestrichen wird. Der so vorbereitete Bremsscheibenrohling wird anschließend beispielsweise bei Temperaturen oberhalb 1420°C mit Silizium in Kontakt gebracht, so dass sich die keramische Matrix im Grundkörper als auch die Metall/Karbid enthaltenden Bereiche bilden.

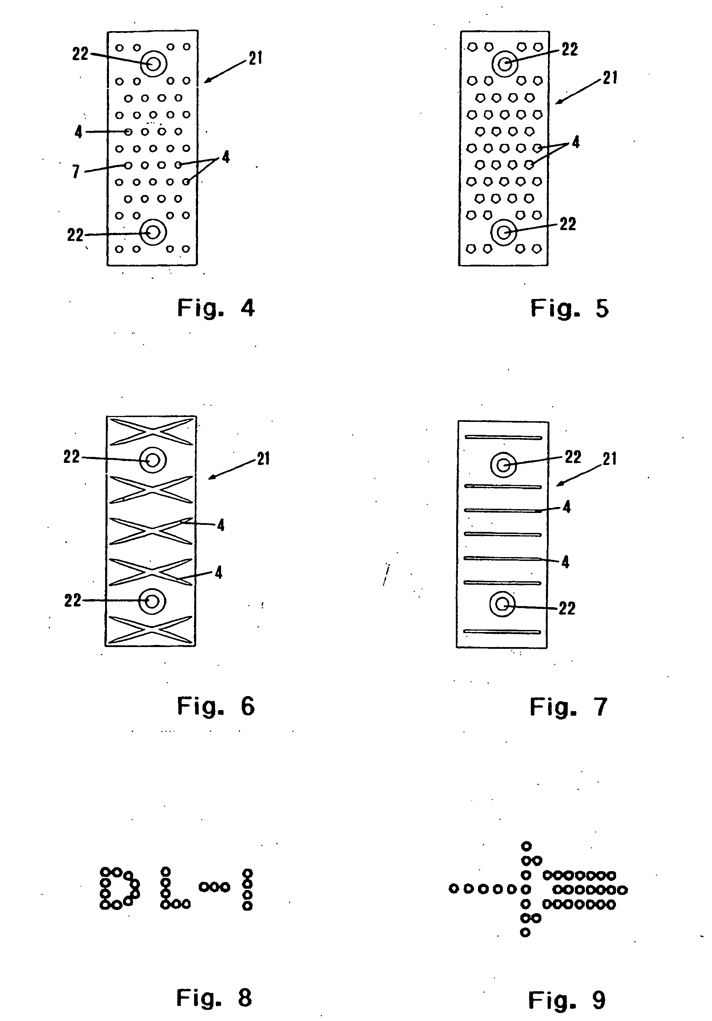

Während anhand der Figuren 1 bis 3 die Herstellung einer Bremsscheibe beschrieben ist, ist ersichtlich, dass nach dem Verfahren auch andere geformte Bauteile hergestellt werden können. Beispielsweise ist es möglich, Reibbeläge mit unterschiedlicher Ausgestaltung der Aussparungen 4 herzustellen. Verschiedene solcher Reibbeläge sind in den Figuren 4 bis 7 in einer Draufsicht auf deren Funktionsflächen gezeigt und allgemein mit dem Bezugszeichen 21 bezeichnet. Diese Reibbeläge 21 besitzen zwei zentrale Befestigungsbohrungen 22. Während in Figur 4 in der Oberfläche des Reibbelags 21 kreisförmige bzw. kegelförmige Aussparungen 4, gefüllt mit Einlagen 7, zu sehen sind, die denjenigen in der Bremsscheibe 1 entsprechen, zeigt der Reibbelag 21 der Figur 5 im Querschnitt fünfeckige Aussparungen. Auch diese fünfeckigen Aussparungen 4 besitzen eine konische, sich zur Mitte des Reibbelags, im Querschnitt gesehen, hin verjüngende Form.

Der Reibbelag 21 der Figur 6 zeigt kreuzförmig angeordnete Aussparungen 4, die gleichmäßig über die Oberfläche des Reibbelags 21 verteilt sind. Schließlich ist eine weitere Form von Aussparungen 4 in Figur 7 dargestellt; hierbei handelt es sich um Schlitze, die ein gleichmäßiges, streifenartiges Muster bilden.

In bestimmten Bereichen, beispielsweise einer Bremsscheibe 1 oder eines Reibbelags 21, können über die Anzahl und die Anordnung der Aussparungen 4 und die darin eingebrachten Einlagen 7 Beschriftungen (siehe Figur 8) oder auch Logos (siehe Figur 9) erzeugt werden, ohne dass dadurch die Bauteileigenschaften beeinträchtigt werden.

### Beispiel

Nachfolgend wird ein konkretes Beispiel in den einzelnen Verfahrensschritten erläutert.

Hergestellt wurde ein Funktionsmuster, bei dem als Ausgangsstoffe Phenolharz, Kohlenstofffasergewebe und Kohlenstoffpulver verwendet wurden. Die Herstellung erfolgte im Wesentlichen nach folgenden Verfahrensschritten: Herstellung einer polymeren Vorform in herkömmlicher Autoklav-Technik, Pyrolyse der Vorform bis 1650°C in inerter Atmosphäre, Einbringen der Aussparungen mittels einem diamantbesetzten Senkwerkzeugs, Auffüllen der Aussparungen mit einem Phenolharz/Kohlenstoffgemisch und anschließender Keramisierung bei T>1420°C mit Silizium im Vakuum.

Beim ersten Schritt wurde eine aus mehreren mit Phenolharz vorimprägnierten Kohlenstofffasergewebelagen aufgebaute CFK-Vorform als Platte in Autoklav-Technik hergestellt. Die verwendeten Gewebelagen wurden so angeordnet, dass eine Faserverstärkung in Winkeln von 0 und 90° in der Ebene erzielt wurde. Verwendet wurde ein Leinwand-Gewebe mit 3K-HTA-Fasern. Insgesamt wurde ein Faservolumengehalt im CFK-Zustand von 50% eingestellt. Die Plattengröße betrug 200x200x11 mm³. Anschließend wurde diese Platte bei Temperaturen bis 1650°C pyrolysiert. Die dabei entstandene poröse C/C-Platte wurde dahingehend mechanisch bearbeitet, dass ein Bremsscheibenrohling der Abmaße 113 mm Außendurchmesser, 49 mm Innendurchmesser und 10 mm Dicke entstand. In diesen Bremsscheibenrohling wurde eine Vielzahl von kegelförmigen Aussparungen (gemäß Figur 1) mittels diamantbesetzter Senker eingebracht. Der Durchmesser der Aussparungen wurde dabei mit 3 mm und deren Tiefe mit ebenfalls 3 mm gewählt. Anschließend wurden die Aussparungen mit einer kohlenstoffhaltigen Phenolharzpaste aufgefüllt und bei einer Temperatur von 200°C ausgehärtet. Nach diesem Verfahrensschritt wurde dieser derart behandelte Vorkörper mit flüssigem Silizium bei einer Temperatur von T > 1420°C in Kontakt gebracht. Durch die Reaktion des Siliziums mit dem Matrixkohlenstoff des Grundkörpers während dieser Keramisierung wurde die keramische SiC-Matrix des Grundkörpers gebildet. Zusätzlich reagierte der in die Aussparungen eingebrachte Kohlenstoff mit dem Silizium zu SiC und bildete die Si/SiC enthaltenden Bereiche. Abschließend wurde der Bremsscheibenrohling mittels diamantbesetzter Werkzeuge auf die Endmaße 111 mm Außendurchmesser, 51 mm Innendurchmesser und 8 mm Dicke geschliffen und mit 6 Anbindungsbohrungen mit einem Durchmesser von 5,5 mm versehen.

## Patentansprüche

1. Verfahren zur Herstellung eines tribologisch über eine Funktionsoberfläche beanspruchten Bauteils, das einen Halterungskörper aus mit Kohlenstoffund/oder Keramikfasem verstärktem Verbundwerkstoff aufweist, **dadurch gekennzeichnet, dass** die Funktionsoberfläche(n) des Halterungskörpers eine Vielzahl von voneinander getrennten, lokalen, Karbid enthaltenden Oberflächenbereichen aufweist (aufweisen), die mit dem Halterungskörper, Einlagen bildend, fest verbunden sind, und daß zur Bildung dieser Einlagen in den Halterungskörper, der einen C-Gehalt von mindestens 20 Gew.-% aufweist, Aussparungen eingebracht werden, deren Tiefe höchstens etwa 3/4 der Gesamtdicke des Halterungskörpers beträgt, daß diese Aussparungen mit entweder einem kohlenstoffhaltigen Material und/oder einer kohlenstoffhaltigen Paste aufgefüllt werden und in Kontakt mit flüssigem Metall zur Bildung der Einlagen mit Metall/Karbid enthaltenden Oberflächenbereichen bei Temperaturen oberhalb des Schmelzpunkts des Metalls gebracht werden, wobei diese Einlagen direkt mit dem Halterungskörper verbunden werden und das Metall wenigstens teilweise mit dem Kohlenstoff zu Karbid reagiert.

2. Verfahren nach Anspruch 1, **dadurch gekennzeichnet, daß** für den Halterungskörper eine Vorform hergestellt wird, in der die Aussparungen durch Einpressen eines Formwerkzeugs erzeugt werden.

3. Verfahren nach Anspruch 2, **dadurch gekennzeichnet, daß** die Vorform durch das Verpressen eines Faser/Harz-Gemisches hergestellt wird und die Aussparungen dabei durch das Formwerkzeug gebildet werden.

4. Verfahren nach Anspruch 3, **dadurch gekennzeichnet, daß** zur Herstellung des Halterungskörper Fasern mit einer Länge im Bereich von 1 mm bis 200 mm eingesetzt werden.

5. Verfahren nach Anspruch 1, **dadurch gekennzeichnet, daß** für den Halterungskörper eine Vorform in Form eines nicht verformbaren Grünlings oder bereits pyrolysiertem Grünlings bereitgestellt wird, in den die Aussparungen durch spanabhebende Bearbeitung eingebracht werden.

6. Verfahren nach Anspruch 1, **dadurch gekennzeichnet, daß** die Aussparungen im Querschnitt kreisförmig oder polygonal in der Oberfläche des Halterungskörpers ausgebildet werden.

7. Verfahren nach Anspruch 1, **dadurch gekennzeichnet, daß** die Aussparungen als nutförmige Vertiefungen ausgebildet werden.

8. Verfahren nach Anspruch 1, **dadurch gekennzeichnet, daß** die Aussparungen in Richtung von der Oberfläche in den Halterungskörper hinein sich verjüngend ausgebildet werden.

9. Verfahren nach Anspruch 1, **dadurch gekennzeichnet, daß** die Aussparungen mit einer Phenolharz und Kohlenstoffpulver enthaltenden, schmier- oder gießfähigen Paste gefüllt werden.

10. Verfahren nach Anspruch 1, **dadurch gekennzeichnet, daß** die Aussparungen mit einem pyrolysierbaren Material gefüllt werden.

11. Verfahren nach Anspruch 1, **dadurch gekennzeichnet, daß** die Aussparungen mit einer Paste aus Phenolharz und einem pyrolysierbaren Material gefüllt werden.

12. Verfahren nach Anspruch 10, **dadurch gekennzeichnet, daß** das pyrolysierbare Material vor dem Einbringen in die Aussparungen bei Temperaturen bis mindestens 900°C unter Luftabschluß pyrolysiert wird.

13. Verfahren nach Anspruch 11, **dadurch gekennzeichnet, daß** das pyrolysierbare Material vor der Herstellung der Paste bei Temperaturen bis mindestens 900°C unter Luftabschluß pyrolysiert wird.

14. Verfahren nach einem der Ansprüche 10 bis 13, **dadurch gekennzeichnet, daß** als pyrolysierbares Material Holzpulver und/oder Holzfasern und/oder Zellstoff und/oder Papier und/oder Pappe eingesetzt wird.

15. Verfahren nach Anspruch 1, **dadurch gekennzeichnet, daß** die Aussparungen mit einer Kohlenstofffasern und/oder -partikeln enthaltenden Phenolharzpaste ausgefüllt werden.

16. Verfahren nach Anspruch 1, **dadurch gekennzeichnet, daß** als Karbid bildendes Metall Silizium eingesetzt wird.

17. Verfahren nach Anspruch 16, **dadurch gekennzeichnet, daß** der Kohlenstoffgehalt der SiC-haltigen Einlagen auf maximal 20 Gew.-% eingestellt wird.

18. Verfahren nach Anspruch 16, **dadurch gekennzeichnet, daß** der SiC-Gehalt auf 20 - 80 Gew.-% eingestellt wird.

19. Verfahren nach Anspruch 16, **dadurch gekennzeichnet, daß** der Si-Gehalt auf 20 - 80 Gew.-% eingestellt wird.

20. Verfahren nach Anspruch 1, **dadurch gekennzeichnet, daß** die jeweilige Einlage einen Oberflächenbereich mit einem Durchmesser von 2-5 mm auf der Funktionsoberfläche des Halterungskörpers aufweist.

21. Verfahren nach Anspruch 1, **dadurch gekennzeichnet, daß** Aussparungen mit einer Tiefe von 1-5 mm gebildet werden.

22. Verfahren nach Anspruch 1, **dadurch gekennzeichnet, daß** die Oberflächenbereiche der Einlagen mit ihren Rändern 2-10 mm vom Bauteilrand des Halterungskörpers beabstandet werden.

23. Verfahren nach Anspruch 1, **dadurch gekennzeichnet, daß** die Oberflächenbereiche in einem schachbrettartigen Muster angeordnet werden.

24. Verfahren nach Anspruch 1, **dadurch gekennzeichnet, daß** die Karbid enthaltenden Bereiche in einem Grundkörper aus C/C, C/SiC oder C/C-SiC eingebracht werden.

25. Verfahren nach Anspruch 1, **dadurch gekennzeichnet, daß** die Karbid enthaltenden Bereiche in einem Grundkörper eingebracht werden, der vornehmlich aus einzelnen, übereinander gestapelten Kohlenstoff-Gewebelagen aufgebaut ist.

26. Verfahren nach Anspruch 1, **dadurch gekennzeichnet, daß** für den Halterungskörper eine Vorform hergestellt wird, in dessen Oberfläche das zur Karbidbildung verwendete pyrolysierte Material eingepresst wird und das nach der Karbidbildung die Karbid enthaltenden Bereiche darstellt.

27. Verfahren nach Anspruch 1, **dadurch gekennzeichnet, daß** einzelne Karbid enthaltende Bereiche mit schräg zur Oberflächennormalen verlaufenden Seiten ausgebildet werden.

28. Verfahren nach Anspruch 1, **dadurch gekennzeichnet, daß** einzelne Karbid enthaltende Bereiche so angeordnet werden, daß deren Gesamtbild ein Logo oder eine Beschriftung oder eine Kennzeichnung darstellt.

## Claims

1. A process for the production of a component having a tribologically stressed functional surface, which comprises a holding body consisting of a composite material reinforced with carbon and/or ceramic fibers, **characterized in that** the functional surface(s) of the holding body has(have) a plurality of local, carbide-containing surface portions separated from one another, which are firmly connected to the holding body, forming inserts, and that for the formation of said inserts recesses are introduced into the holding body having a C content of at least 20% by wt., the depth of said recesses being not more than about 3/4 of the total thickness of the holding body, that said recesses are filled with either a carbon-containing material and/or a carbon-containing paste and are brought into contact with liquid metal for forming the inserts with metal/carbide-containing surface portions at temperatures above the melting point of the metal, said inserts being directly connected to the holding body and the metal reacting at least in part with the carbon to form carbide.

2. The process according to claim 1, **characterized in that** a preform in which the recesses are formed by pressing a molding tool thereinto is produced for the holding body.

3. The process according to claim 2, **characterized in that** the preform is produced by pressing a fiber/resin mixture and the recesses are thus formed by the molding tool.

4. The process according to claim 3, **characterized in that** fibers of a length ranging from 1 mm to 200 mm are used for producing the holding body.

5. The process according to claim 1, **characterized in that** a preform in the form of a non-deformable green compact or already pyrolyzed green compact is provided for the holding body, the recesses being introduced into said compact by machining.

6. The process according to claim 1, **characterized in that** the recesses viewed in cross section are made circular or polygonal in the surface of the holding body.

7. The process according to claim 1, **characterized in that** the recesses are configured as groove-like recesses.

8. The process according to claim 1, **characterized in that** the recesses are made to taper in the direction from the surface into the holding body.

9. The process according to claim 1, **characterized in that** the recesses are filled with a paste showing lubricity or pourability and containing phenolic resin and carbon powder.

10. The process according to claim 1, **characterized in that** the recesses are filled with a pyrolyzable material.

11. The process according to claim 1, **characterized in that** the recesses are filled with a paste of phenolic resin and a pyrolyzable material.

12. The process according to claim 10, **characterized in that** the pyrolyzable material is pyrolyzed in the absence of air at temperatures of up to at least 900°C prior to introduction into the recesses.

13. The process according to claim 11, **characterized in that** the pyrolyzable material is pyrolyzed in the absence of air at temperatures of up to at least 900°C prior to the preparation of the paste.

14. The process according to any one of claims 10 to 13, **characterized in that** wood powder and/or wood fibers and/or cellulose and/or paper and/or paperboard is used as the pyrolyzable material.

15. The process according to claim 1, **characterized in that** the recesses are filled with a phenolic resin paste containing carbon fibers and/or particles.

16. The process according to claim 1, **characterized in that** silicon is used as the carbide-forming metal.

17. The process according to claim 16, **characterized in that** the carbon content of the SiC-containing inserts is set to not more than 20% by wt.

18. The process according to claim 16, **characterized in that** the SiC content is set to 20-80% by wt.

19. The process according to claim 16, **characterized in that** the Si content is set to 20-80% by wt.

20. The process according to claim 1, **characterized in that** the respective insert has a surface portion with a diameter of 2-5 mm on the functional surface of the holding body.

21. The process according to claim 1, **characterized in that** recesses are formed with a depth of 1-5 mm.

22. The process according to claim 1, **characterized in that** the surface portions of the inserts are spaced apart with their edges 2 mm to 10 mm from the component edge of the holding body.

23. The process according to claim 1, **characterized in that** the surface portions are arranged in a chessboard-like pattern.

24. The process according to claim 1, **characterized in that** the carbide-containing portions are introduced into a basic body of C/C, C/SiC, or C/C-SiC.

25. The process according to claim 1, **characterized in that** the carbide-containing portions are introduced into a basic body which is predominantly built up of individual carbon fabric layers stacked one upon the other.

26. The process according to claim 1, **characterized in that** for the holding body a preform is produced having a surface into which the pyrolyzed material used for carbide formation is pressed, the material representing the carbide-containing portions after carbide formation.

27. The process according to claim 1, **characterized in that** individual carbide-containing portions are formed with sides extending in a direction oblique to the surface normal.

28. The process according to claim 1, **characterized in that** individual carbide-containing portions are arranged such that their overall picture represents a logo or an inscription or an identification.

## Revendications

1. Procédé pour la fabrication d'un composant sollicité de manière tribologique par une surface de fonction, lequel présente un corps de fixation en matériau composite renforcé aux fibres de carbone et/ou de verre, **caractérisé en ce que** la (les) surface(s) de fonction du corps de fixation présente(nt) un grand nombre de zones de surfaces contenant du carbure qui sont reliées fixement au corps de fixation en formant des inserts, et **en ce que** pour la formation de ces inserts dans le corps de fixation, qui présente une teneur en C d'au moins 20 % pour cent en poids, sont ménagés des évidements dont la profondeur équivaut à maximum 3/4 de l'épaisseur totale du corps de fixation, **en ce que** ces évidements sont remplis soit d'un matériau contenant du carbone et/ou soit d'une pâte contenant de du carbone et sont amenés en contact avec du métal liquide pour la formation des inserts avec des zones de surface contenant du carbure de métal à des températures supérieures au point de fusion du métal, ces inserts étant reliés directement au corps de fixation et le métal réagissant au moins partiellement avec le carbone en carbure.

2. Procédé selon la revendication 1, **caractérisé en ce que** pour le corps de fixation, il est préfabriqué une préforme dans laquelle sont ménagés les évidements par pressage d'un outil de formage.

3. Procédé selon la revendication 2, **caractérisé en ce que** la préforme est fabriquée par la compression d'un mélange fibre/résine et les évidements sont formés par l'outil de formage.

4. Procédé selon la revendication 3, **caractérisé en ce que** pour la fabrication du corps de fixation des fibres d'une longueur comprise entre 1 mm et 200 mm sont utilisées.

5. Procédé selon la revendication 1, **caractérisé en ce que** pour la fabrication du corps de fixation, une préforme est préparée sous forme d'une ébauche non préformable ou d'une ébauche pyrolysée préalablement pour le corps de fixation dans lequel les évidements sont insérés par un usinage par enlèvement de copeaux.

6. Procédé selon la revendication 1, **caractérisé en ce que** les évidements sont réalisés en coupe transversale en forme circulaire ou polygonale dans la surface du cops de fixation.

7. Procédé selon la revendication 1, **caractérisé en ce que** les évidements sont réalisés par des cavités en forme de rainure.

8. Procédé selon la revendication 1, **caractérisé en ce que** les évidements sont réalisés en direction de la surface dans le corps de fixation en s'effilant en pointe.

9. Procédé selon la revendication 1, **caractérisé en ce que** les évidements sont remplis d'une résine phénolique et d'une pâte coulante ou visqueuse contenant de la résine phénolique et de poudre de carbone.

10. Procédé selon la revendication 1, **caractérisé en ce que** les évidements sont remplis d'un matériau pyrolysable.

11. Procédé selon la revendication 1, **caractérisé en ce que** les évidements sont remplis d'une pâte en résine phénolique et un matériau pyrolysable.

12. Procédé selon la revendication 10, **caractérisé en ce que** le matériau pyrolysable est pyrolysé avant l'introduction dans les évidements à des températures atteignant au moins 900°C sous exclusion d'air.

13. Procédé selon la revendication 11, **caractérisé en ce que** le matériau pyrolysable a été pyrolysé avant la fabrication de la pâte à des températures jusqu'à au moins 900°C sous exclusion d'air.

14. Procédé selon l'une des revendications 10 à 13, **caractérisé en ce qu'**en tant que matériau pyrolysable, on utilise de la poudre de bois et/ou des fibres de bois et/ou de la cellulose et/ou du papier et/ou du carton.

15. Procédé selon la revendication 1, **caractérisé en ce que** les évidements sont remplis de pâte de résine phénolique contenant des fibres et/ou des particules de carbone.

16. Procédé selon la revendication 1, **caractérisé en ce que** le métal formant le carbure silicium est utilisé.

17. Procédé selon la revendication 16, **caractérisé en ce que** la teneur en carbone des inserts contenant du SiC est réglée à maximal 20 pour cent en poids.

18. Procédé selon la revendication 16, **caractérisé en ce que** la teneur en SiC est réglée à 20 - 80 pour cent en poids.

19. Procédé selon la revendication 16, **caractérisé en ce que** la teneur en Si est réglée à 20 - 80 pour cent en poids.

20. Procédé selon la revendication, **caractérisé en ce que** l'insert respectif présente une zone de surface avec un diamètre de 2-5 mm sur la surface de fonction du cops de fixation.

21. Procédé selon la revendication 1, **caractérisé en ce que** des évidements sont formés avec une profondeur de 1 - 5 mm.

22. Procédé selon la revendication 1, **caractérisé en ce que** les zones de surface des inserts sont placées à distance par leurs bords à 2-10 mm du bord de composant du corps de fixation

23. Procédé selon la revendication 1, **caractérisé en ce que** les zones de surface sont disposées selon un modèle d'échiquier.

24. Procédé selon la revendication 1, **caractérisé en ce que** les zones contenant du carbure sont introduites dans un corps de base en C/C, C/SiC ou C/C-Sic.

25. Procédé selon la revendication 1, **caractérisé en ce que** les zones contenant du carbure sont introduites dans un corps de base qui est composé de couches de carbone individuelles empilées les unes sur les autres.

26. Procédé selon la revendication 1, **caractérisé en ce que** pour le corps de fixation, il est fabriqué une préforme, dans la surface duquel est pressée le matériau pyrolysé utilisé pour la formation de carbure et qui représente les zones contenant le carbure après la formation de carbure.

27. Procédé selon la revendication 1, **caractérisé en ce que** des zones individuelles contenant du carbure sont réalisées avec des faces s'étendant de manière inclinée aux normales de surface.

28. Procédé selon la revendication 1, **caractérisé en ce que** des zones individuelles contenant du carbure sont disposées de sorte que l'ensemble de l'image représente un logo ou une inscription ou une désignation.
